# FASCICULE DE BREVET EUROPEEN

(11) **EP 3 188 073 B1**
(45) Date de publication et mention de la délivrance du brevet: **19.09.2018**
(21) Numéro de dépôt: 16206988.4
(22) Date de dépôt: 27.12.2016
(51) Int. Cl.: G06F 21/86

(54) **SYSTÈME DE DÉTECTION D'INTRUSIONS**
ANGRIFFERKENNUNGSSYSTEM
INTRUSION DETECTION SYSTEM

(30) Priorité: 31.12.2015 FR 1502749
(43) Date de publication de la demande: 05.07.2017
(73) Titulaire: Thales, 92400 Courbevoie (FR)
(72) Inventeur: COQUOT, Gilles, 92622 GENNEVILLIERS CEDEX (FR); HANNAUER, Christophe, 92622 GENNEVILLIERS CEDEX (FR); LEMAHIEU, Steeve, 49309 CHOLET (FR); PICHET, Jérôme, 49309 CHOLET (FR)
(74) Mandataire: Lavoix

(56) Documents cités:
- FR-A1- 2 805 074
- US-A1- 2009 065 591
- US-A1- 2009 107 712

## Description

La présente invention concerne un système de détection d'intrusions comprenant :
- au moins deux couches de maillage superposées, chaque couche de maillage comprenant une pluralité de cellules et une pluralité de points de connexion traversant, chaque cellule comprenant au moins un motif continu dont au moins une extrémité est reliée à un point de connexion traversant, le taux de couverture de l'ensemble des motifs de chaque cellule étant strictement supérieur à 80 pourcents, l'ensemble des cellules de chaque couche de maillage délimitant une zone protégée par la couche de maillage,
- une pluralité de connexions, chaque connexion connectant entre eux deux motifs de cellules de différentes couches de maillage par l'intermédiaire de points de connexion traversant pour former des boucles, chaque boucle étant un circuit électrique continu, chaque boucle comprenant des motifs appartenant à au moins deux couches de maillage différentes,
- un module de détection propre à détecter une modification d'une caractéristique électrique de chaque boucle.

Dans le domaine de la sécurité informatique, l'un des enjeux consiste à protéger les équipements par lesquels transitent des informations sensibles. De tels équipements comprennent notamment des circuits imprimés ou des circuits intégrés. Un circuit imprimé, aussi appelé carte électronique, est un support permettant de maintenir et de relier électriquement entre eux un ensemble de composants électroniques. Un circuit intégré, aussi appelé puce électronique, est un composant électronique reproduisant une ou plusieurs fonctions électroniques et intégrant généralement plusieurs types de composants électroniques de base dans un volume réduit.

Les pistes d'un circuit imprimé et les connexions des composants électroniques branchés sur un tel circuit imprimé sont susceptibles de faire l'objet d'attaques physiques. De telles attaques physiques consistent, notamment, à approcher des sondes ou à brancher des électrodes sur les pistes du circuit imprimé ou sur les connexions de composants branchés sur le circuit imprimé de sorte à capturer les signaux transitant sur les pistes ou les connexions ou à injecter des signaux. Les signaux capturés sont ensuite utilisés par les attaquants pour recueillir des données sensibles. Les signaux injectés sont utilisés pour perturber les signaux échangés ou provoquer un dysfonctionnement de l'équipement.

Des attaques similaires sont susceptibles d'être réalisées sur des circuits intégrés.

De ce fait, des systèmes de protection sont utilisés pour protéger contre les intrusions les circuits imprimés et les circuits intégrés de tels équipements. Les systèmes de protection comprennent, par exemple, des maillages protecteurs en deux ou trois dimensions qui protègent le volume contenant les données sensibles. Les maillages sont notamment formés de boucles électriques distinctes comprenant des motifs. La continuité ou l'altération de telles boucles électriques est vérifiée en faisant circuler un signal de contrôle dans les boucles et en détectant les pertes ou variations de signal, dues à une rupture de la boucle, ou à une modification de l'une des caractéristiques électriques du signal suite à une altération de la boucle. Lorsqu'une tentative d'intrusion est détectée, des actions de réaction sont enclenchées par le système de protection consistant, par exemple, à effacer les données sensibles de l'équipement.

Or, de tels maillages ont un niveau de résistance aux attaques insuffisant et sont contournés par l'attaquant dès lors que l'attaquant a compris la logique du maillage.

En effet, la plupart du temps, le maillage est principalement constitué de lignes rectilignes parallèles superposées en décalé sur différentes couches de façon à occulter la surface à protéger. De telles lignes ont, par exemple, des formes rectilignes ou sont des lignes brisées en forme de chevrons, recouvrant la surface à protéger. La complexité d'un tel maillage est relativement simple à analyser pour suivre le parcours d'une boucle électrique et est, par conséquent, susceptible d'être contournée par un attaquant après une phase de rétro-ingénierie. La rétro-ingénierie, également appelée rétro-conception, est une activité qui consiste à étudier un objet pour en déterminer le fonctionnement interne ou la méthode de fabrication.

Après rétro-ingénierie, l'attaquant a connaissance des positions et des propriétés des différentes boucles électriques du maillage. L'attaquant est alors susceptible de shunter certaines de ces boucles électriques et donc de les sectionner pour libérer un espace d'accès à l'équipement à protéger, sans que le système de protection ne détecte l'intrusion. Il est entendu par le terme « shunter », l'action de court-circuiter un circuit électrique.

Il existe donc un besoin pour un système de protection plus résistant aux attaques et rendant plus difficile pour un attaquant le court-circuit d'une ou plusieurs boucles électriques d'un maillage après rétro-ingénierie.

US 2009/107712 A1 divulgue un système de détection d'intrusions.

A cet effet, l'invention a pour objet un système de détection d'intrusions du type précité, dans lequel les points de connexion traversant de chaque couche de maillage sont répartis sur toute la surface de la zone protégée par la couche de maillage.

L'invention consiste en un système de détection d'intrusions tel que défini dans le revendications.

Suivant des modes de réalisation particuliers, le système de détection d'intrusions comprend une ou plusieurs des caractéristiques suivantes, prises isolément ou suivant toutes les combinaisons techniquement possibles :
- chaque zone protégée est formée d'une partie centrale et d'une partie périphérique entourant la partie centrale, la partie périphérique occupant au plus 30 pourcents de la surface de la zone protégée, les points de connexion traversant de chaque couche de maillage étant répartis sur la zone centrale et sur la zone périphérique de la zone protégée par la couche de maillage.
- l'écart entre la densité moyenne de points de connexion traversant sur chaque sous-zone connexe de la zone protégée est inférieur ou égal à 10 pourcents.
- la plus grande dimension de chaque cellule est au plus égale à un tiers de la plus grande dimension de la zone protégée par la couche de maillage de la cellule.
- chaque cellule est délimitée par une enveloppe contenant le ou les motifs de la cellule, au moins un motif d'une cellule d'une couche de maillage comprenant une extrémité en saillie par rapport à l'enveloppe de la cellule, l'extrémité en saillie étant venue de matière avec le ou l'un des motifs de la cellule, l'extrémité en saillie connectant le motif à un autre motif de la même ou d'une autre couche de maillage.
- au moins une cellule d'une couche de maillage comprend au moins deux motifs entrelacés.
- l'espacement entre les cellules adjacentes est inférieur ou égal à 100 micromètres, de préférence inférieur ou égal à 50 micromètres.
- les motifs d'une même boucle et appartenant à une première couche de maillage et à une deuxième couche de maillage, adjacente à la première couche de maillage, sont disposés les uns par rapport aux autres de sorte que les projections selon la direction de superposition desdits motifs de la première couche de maillage sur la deuxième couche de maillage soient partiellement superposées ou non superposées auxdits motifs de la deuxième couche de maillage.
- les points de connexion traversant connectant les motifs de chaque boucle sont disposés en vis-à-vis de motifs appartenant à au moins une autre boucle.
- la distance minimale séparant deux cellules d'une même boucle et appartenant à deux couches de maillage différentes est inférieure ou égale à 100 micromètres.
- les points de connexion traversant sont des microvias.

L'invention a aussi pour objet un système de détection d'intrusions selon la revendication 1.

Suivant des modes de réalisation particuliers, le système de détection d'intrusions comprend une ou plusieurs des caractéristiques des revendications 2 à 10, prises isolément ou suivant toutes les combinaisons techniquement possibles.

D'autres caractéristiques et avantages de l'invention apparaîtront à la lecture de la description qui suit de modes de réalisation de l'invention, donnée uniquement à titre d'exemple et en référence aux dessins qui sont :
- figure 1, une vue schématique en coupe, d'un exemple d'un système de détection d'intrusions,
- figure 2, une vue schématique en éclaté de deux couches de maillage superposées, les cellules des deux couches de maillage étant connectées les unes aux autres par une matrice d'interconnexion comprenant des connexions,
- figure 3, une vue schématique du dessus d'un exemple d'une couche de maillage comprenant des cellules, chacune formée d'un motif,
- figure 4, une vue schématique de dessus de deux motifs entrelacés au sein d'une même cellule,
- figure 5, une vue schématique de dessus d'une couche de maillage comprenant des cellules de forme triangulaire,
- figure 6, une vue schématique de dessus d'une couche de maillage comprenant des cellules de forme carrée,
- figure 7, une vue schématique de dessus d'une couche de maillage comprenant des cellules de forme hexagonale,
- figure 8, une vue schématique de dessus d'une couche de maillage comprenant des cellules de forme complémentaire,
- figure 9, une autre vue schématique d'une couche de maillage comprenant des cellules de forme complémentaire,
- figure 10, une vue schématique de dessus de couches de maillage superposées en décalé et comprenant des cellules identiques de forme carrée,
- figure 11, une autre vue schématique de dessus de couches de maillage superposées en décalé et comprenant des cellules identiques de forme hexagonale,
- figure 12, une vue schématique de dessus d'une superposition en décalé de deux couches de maillage présentant des cellules de formes différentes,
- figure 13, une représentation schématique vue de dessus de cellules présentant des extrémités en saillie dans les motifs d'autres cellules, et
- figure 14, une représentation schématique de connexion entre différentes couches de maillage lorsque les cellules sont restreintes à une matrice de microvias.

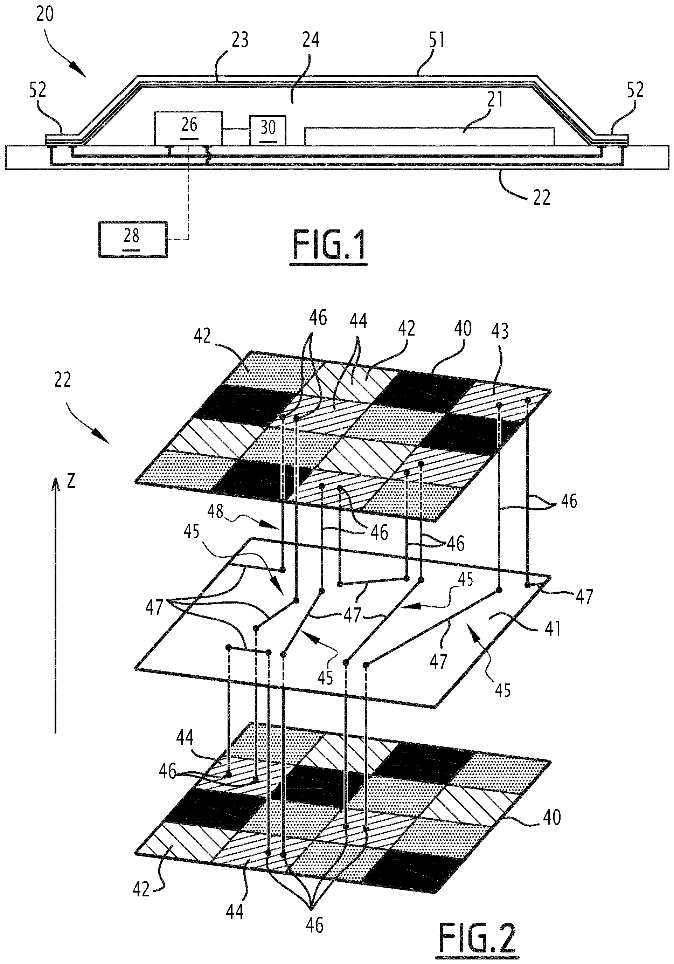

Un système 20 de détection d'intrusions est illustré sur la figure 1.

Le système 20 est destiné à protéger un équipement 21 par lequel transitent des informations sensibles. L'équipement 21 comprend, par exemple, des circuits imprimés ou des circuits intégrés. L'équipement 21 est, par exemple, un dispositif de chiffrement ou un équipement de transmission par lequel transitent des données sensibles telles que des données bancaires.

Le système 20 est propre à détecter des tentatives d'intrusions en provenance de l'extérieur du système 20. Les tentatives d'intrusions sont notamment des attaques physiques consistant à approcher des sondes ou à brancher des électrodes sur un circuit imprimé de l'équipement 21 protégé par le système 20.

Comme illustré sur la figure 1, le système 20 comprend une première surface de protection 22 formée, par exemple, en dessous de l'équipement 21, et une deuxième surface de protection 23, formant un capot, superposé sur la première surface de protection 22. La première surface de protection 22 et la deuxième surface de protection 23 forment ainsi un volume interne 24 protégé contre les intrusions, et dans lequel est disposé l'équipement 21 à protéger.

Le système 20 comprend, en outre, un module de détection 26, une source d'énergie principale 28 pour alimenter le module de détection 26, ainsi qu'une source d'énergie secondaire 30 alimentant le module de détection 26 en situations d'urgence.

La première surface de protection 22 comprend dans son volume plusieurs couches superposées selon une direction de superposition Z parmi lesquelles au moins deux couches de maillage 40 ou au moins deux couche de maillage 40 et au moins une matrice d'interconnexion 41.

Chaque couche de maillage 40 comprend une pluralité de cellules 42.

L'ensemble des cellules 42 de chaque couche de maillage 40 délimite une zone protégée par la couche de maillage 40. Ainsi, lorsque les cellules 42 occupent toute la couche de maillage 40, la zone protégée est l'intégralité de la couche de maillage 40.

De préférence, la plus grande dimension de chaque cellule 42 est au plus égale à un tiers de la plus grande dimension de la zone protégée par la couche de maillage 40 de la cellule 42.

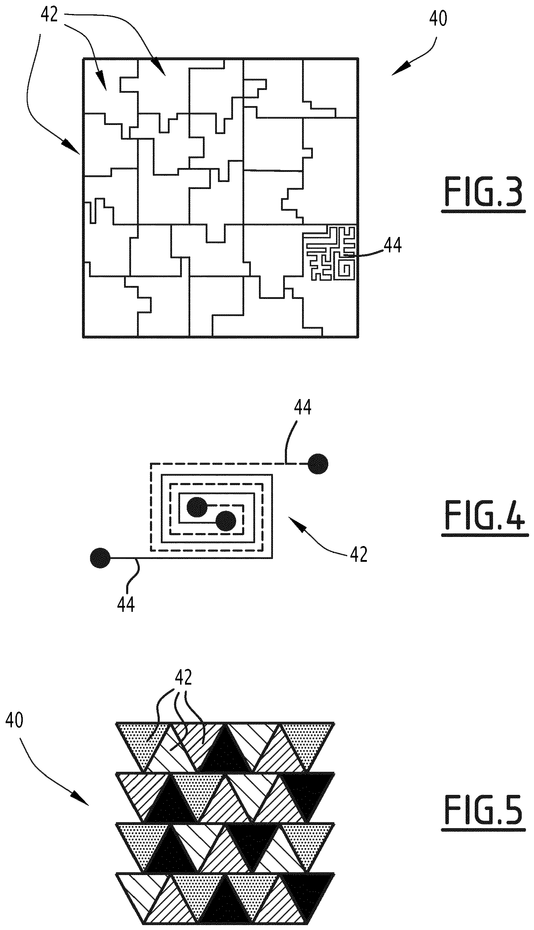

Chaque cellule 42 comprend au moins un motif géométrique 44 couvrant toute la surface de la cellule 42, comme cela est illustré sur la figure 3 pour seulement une cellule 42.

Chaque motif 44 est une piste électrique continue non ramifiée, par exemple curviligne, sans croisement et dont la rupture ou l'altération d'une caractéristique électrique permet de détecter une tentative d'intrusions dans le système 20. Les motifs présentent, par exemple, des rebroussements. Les motifs ont, par exemple, des formes en boustrophédon, en spirale ou encore labyrinthique tel qu'illustré sur la figure 3.

Il est entendu par le terme « piste», un circuit électrique continu dans lequel un courant est propre à circuler et dont chacune des deux extrémités est reliée soit à un point de connexion, tels qu'une via, soit à une plage de report de composants qui est, par exemple enfouie, dans le circuit imprimé ou câblée en surface dans le volume interne 24. Une plage de report de composants est une connexion à des composants situés hors des couches de la première surface de protection 22 considérée.

De préférence, le taux de couverture de l'ensemble des motifs 44 de chaque cellule 42 est strictement supérieur à 80 pourcents, de préférence égale à 100%.

Il est entendu par l'expression « taux de couverture », le rapport de la surface occupée par l'ensemble des motifs 44 d'une cellule 42 sur la surface totale de la cellule 42. La surface d'un motif 44 est l'aire de la piste du motif 44, complétée par l'aire de la bande libre se prolongeant de part et d'autre de la piste sur toute la longueur de la piste et nécessaire pour assurer l'isolation électrique entre la piste et les autres pistes adjacentes.

Pour une piste de 10 µm de large et de longueur L, la largeur de la bande libre de part et d'autre de la piste est, par exemple, égale à 4 µm. La surface du motif est donc le produit de la longueur de la piste par la somme de la largeur de la piste et des bandes libres de part et d'autre de la piste, soit L multiplié par 18 µm.

Avantageusement, au moins une cellule 42 comprend plusieurs motifs 44. Ainsi, dans l'exemple illustré sur la figure 4, une cellule 42 comprend deux motifs 44 entrelacés. L'augmentation du nombre de motifs 44 par cellule 42 et l'entrelaçage des motifs 44 au sein d'une même cellule 42 rend plus difficile pour un attaquant le court-circuitage d'une zone du maillage sans être détecté.

Chaque cellule 42 présente un contour défini par le ou les motifs 44 de la cellule 42. Dans l'exemple illustré sur la figure 3, le contour d'au moins une cellule 42 est irrégulier de sorte que la cellule 42 ne présente pas d'axe de symétrie. En effet, des contours irréguliers pour les cellules 42 rendent plus difficile, lors d'une analyse visuelle, la détection de la frontière entre les différentes cellules 42 d'une même couche de maillage 40, ce qui complexifie le travail de rétro-ingénierie susceptible d'être effectué par un attaquant.

Chaque cellule 42 présente une forme définie comme la surface occupée par le ou les motifs 44 de la cellule 42.

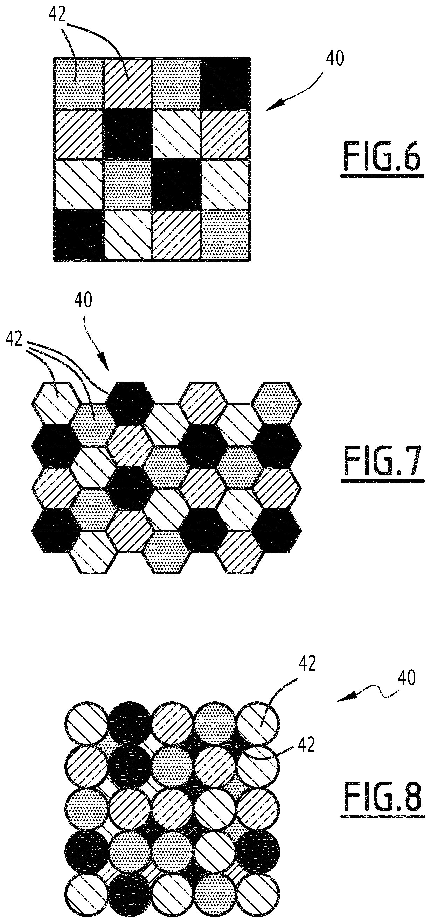

Les formes des cellules 42 sont, par exemple, des formes géométriques simples, telles que des formes triangulaires illustrées sur la figure 5, des formes carrées illustrées sur la figure 6 ou encore des formes hexagonales illustrées sur la figure 7.

En variante et comme illustré sur la figure 3, les formes de certaines cellules 42 ou de toutes les cellules 42 de chaque couche de maillage 40 sont plus complexes telles que les formes utilisées dans la construction de puzzles.

En variante ou en complément, au moins deux cellules 42 de deux couches de maillage 40 différentes ou d'une même couche de maillage 40 ont des formes différentes.

En variante ou en complément, les formes des cellules 42 d'une même couche de maillage 40 ou de couches de maillage 40 adjacentes, sont complémentaires. Par exemple, les interstices entre des cellules 42 ayant un premier type de forme sont complémentaires de cellules 42 ayant un deuxième type de forme. Cela permet de minimiser les zones des couches de maillage 40 non protégées par un maillage.

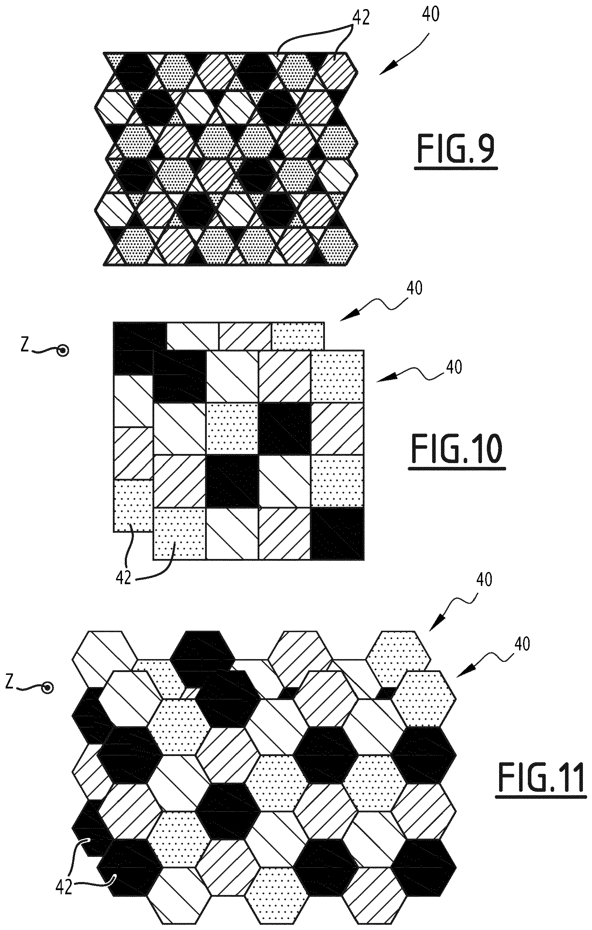

Par exemple, la figure 8 illustre une couche de maillage 40 comprenant un premier type de cellules 42 de forme circulaire et un deuxième type de cellules 42 de forme carrée avec des côtés convexes, complémentaires du premier type de cellules 42. De même, la figure 9 illustre une couche de maillage 40 comprenant un premier type de cellules 42 de forme hexagonale et un deuxième type de cellules 42 de forme triangulaire, complémentaire du premier type de cellules 42.

Ainsi, les formes des cellules 42 d'une même couche de maillage 40 sont choisies de sorte à disposer les cellules 42 côte à côte tout en minimisant l'espace libre, aussi appelé interstice, entre les cellules 42.

Avantageusement, l'interstice entre les cellules 42 adjacentes d'une même couche de maillage 40 est inférieur ou égale à 100 micromètres, de préférence inférieur ou égale à 50 micromètres. L'interstice correspond, par exemple, à l'isolation électrique minimum admissible entre deux pistes adjacentes.

Dans les modes de réalisation illustrés sur les figures 10 et 11, les cellules 42 de chaque couche de maillage 40 ont des formes identiques et sont disposées en vis-à-vis des interstices entre les cellules 42 d'au moins une autre couche de maillage 40 adjacente à ladite couche de maillage 40. En particulier, les cellules 42 de la figure 10 ont une forme carrée et les cellules 42 de la figure 11 ont une forme hexagonale. Une telle disposition permet de diminuer les zones de la première surface de protection 22 non recouvertes par une cellule 42 et ainsi de renforcer la protection contre les intrusions.

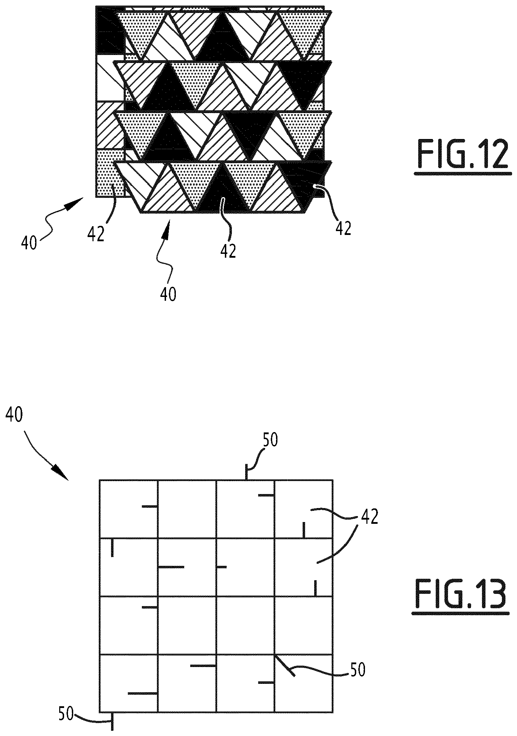

Le mode de réalisation de la figure 12 est similaire à ceux des figures 10 et 11, à la différence que les cellules 42 ont des formes différentes d'une couche de maillage 40 à une autre.

La première surface de protection 22 comprend, en outre, des connexions 45 assurant la liaison entre les motifs 44 de cellules 42 appartenant à des couches de maillage 40 contigüe ou non.

Les connexions 45 comprennent des points de connexion traversant 46 et éventuellement des bras d'interconnexion 47. Lorsque les deux bras d'interconnexion 47 entre les motifs 44 de cellules 42 appartiennent à une même couche de maillage 40, c'est-à-dire qu'il n'y a pas de points de connexion traversant 46 entre lesdits deux bras d'interconnexion 47, alors on considère que les motifs reliés entre eux par lesdits deux bras 47 forment un motif 44 d'une cellule 42 de forme particulière.

Chaque point de connexion traversant 46 est relié par l'une de ses extrémités à une extrémité d'un motif 44 et, par l'autre de ces extrémités à l'un des éléments choisis parmi : un autre motif 44, un autre point de connexion traversant 46, un bras d'interconnexion 47 et une plage de report de composants.

Les points de connexion traversant 46 de chaque couche de maillage 40 sont réparties sur toute la surface de la zone protégée par la couche de maillage 40 et non pas seulement en périphérie de la couche de maillage 40.

De préférence, chaque zone protégée est formée d'une partie centrale et d'une partie périphérique entourant la partie centrale et occupant au plus 30 pourcents de la surface de la zone protégée. Les points de connexion traversant 46 de chaque couche de maillage 40 sont répartis sur la zone centrale et sur la zone périphérique de la zone protégée par la couche de maillage 40.

Avantageusement, l'écart entre la densité moyenne de points de connexion traversant 46 sur chaque sous-zone connexe de la zone protégée est inférieur ou égal à 10 pourcents. La densité moyenne de point de connexion traversant 46 sur chaque sous-zone connexe est définie comme le rapport entre la surface occupée par les points de connexion traversant 46 sur la sous-zone connexe et la surface de la sous-zone connexe.

Dans le mode de réalisation illustré sur la figure 2, les points de connexion traversant 46 sont des microvias. Il est entendu par le terme « microvia », un trou métallique traversant la couche dans laquelle il est formé pour atteindre la couche immédiatement contiguë inférieure. Un tel trou est métallisé pour établir une connexion entre la couche dans laquelle il est formé et la couche inférieure contiguë. Les dimensions de chaque microvia sont de l'ordre de grandeur du micromètre, c'est-à-dire comprises entre 0,1 µm et 100 µm. Les dimensions de chaque microvia sont fonction de l'épaisseur de diélectrique présent entre les couches conductrices.

Les bras d'interconnexion 47 permettent d'interconnecter les motifs 44 des cellules 42 d'une même couche de maillage 40 ou de différentes couches de maillage 40, par l'intermédiaire des points de connexion traversant 46.

Les bras d'interconnexion 47 connectent dans des plans perpendiculaires à la direction de superposition Z, des points de connexion traversant 46 entre eux, des extrémités de motifs 44 entre eux, une extrémité de motif 44 avec une plage de report de composants ou encore une point de connexion traversant 46 avec une plage de report de composants.

Les bras d'interconnexion 47 sont, par exemple, des fils.

Les points de connexion traversant 46 et les bras d'interconnexion 47 connectent des motifs 44 de cellules 42 appartenant à des couches de maillage 40 distinctes et à des couches de maillage 40 identiques.

Dans l'exemple illustré sur la figure 2, chaque connexion 45 comprend, par exemple, dans l'ordre suivant : un premier point de connexion traversant 46 formant une extrémité d'un premier motif 44 d'une cellule 42 d'une première couche de maillage 40, un premier bras d'interconnexion 47 de la matrice d'interconnexions 44 et un deuxième point de connexion traversant 46 formant une extrémité d'un deuxième motif 44 d'une cellule 42 d'une deuxième couche de maillage 40.

Les motifs 44 connectés les uns aux autres par des points de connexion traversant 46 et éventuellement par des bras d'interconnexion 47 forment des boucles, aussi appelées équipotentielles. Il est entendu par le terme « boucle », l'association de pistes, de points de connexion traversant 46 et éventuellement de bras d'interconnexion 47, pour former un circuit électrique continu d'interconnexion entre au minimum deux plages de report de composants. L'ensemble des boucles d'une surface forme un maillage.

Dans les exemples des figures 2 à 3 et 5 à 13, les cellules 42 comprenant au moins un motif 44 et appartenant à une même boucle sont représentées par un même type de hachures, de pointillés ou de fond uni. L'exemple de la figure 2 illustre uniquement les bras d'interconnexion 47 et les points de connexion traversant 46 connectant entre eux les motifs 44 des cellules 42 d'une seule boucle.

Avantageusement, les bras d'interconnexion 47 et/ou les points de connexion traversant 46 connectant les motifs 44 de chaque boucle sont disposés en vis-à-vis de motifs 44 appartenant à au moins une autre boucle.

Chaque boucle formée à partir de connexions 45 comprend des motifs 44 de cellules 42 appartenant à au moins deux couches de maillage 40.

Les connexions 45 entre les motifs 44 des cellules 42 formant les boucles sont, avantageusement, configurées et choisies en usine. Les connexions 45 ne sont, de préférence, pas établies selon une logique déterminée mais sont différentes pour chaque boucle. En outre, les connexions 45 entre les motifs 44 des cellules 42 de chaque boucle ne sont pas prévisibles par symétrie ou par périodicité après étude d'une partie de la boucle. L'interconnexion successive des motifs 44 appartenant à des couches différentes par l'intermédiaire des bras d'interconnexion 47 et éventuellement des points de connexion traversant 46 est assimilable à un tricotage des différentes boucles électriques entre elles.

De préférence, les motifs 44 d'une même boucle et appartenant à une première couche de maillage 40 et à une deuxième couche de maillage 40, adjacente à la première couche de maillage 40, sont disposés les uns par rapport aux autres de sorte que les projections selon la direction de superposition Z des motifs 44 de la première couche de maillage 40 sur la deuxième couche de maillage 40 sont partiellement superposées ou non superposées aux motifs 44 de la deuxième couche de maillage 40.

En d'autres termes, les motifs 44 appartenant à une première boucle ne sont pas totalement superposés selon la direction de superposition Z avec les motifs 44 de la même boucle, mais situés sur une couche de maillage 40 adjacente. Cela permet de complexifier le travail de rétro-ingénierie d'un attaquant. Une telle caractéristique est illustrée notamment sur les figures 10, 11 et 12.

De manière similaire, deux motifs 44 de cellules 42 contigües d'une même couche de maillage 40 appartiennent, de préférence, à des boucles distinctes.

Un exemple de matrice d'interconnexion 41 est illustré sur la figure 2.

Dans le mode de réalisation de la figure 2, le système 20 comprend deux couches de maillage 40, ainsi qu'une matrice d'interconnexion 41.

Les couches de maillage 40 et la matrice d'interconnexion 41 sont superposées les unes aux autres selon la direction de superposition Z, par exemple selon la configuration illustrée sur la figure 2 dans laquelle la matrice d'interconnexion 41 est recouverte de part et d'autre par une couche de maillage 40.

Dans ce cas, la matrice d'interconnexion 41 comprend les bras d'interconnexion 47 propres à interconnecter entre eux les motifs 44 des cellules 42 des couches de maillage 40.

Les bras d'interconnexion 47 sont, de préférence, répartis sur toute la surface de la matrice d'interconnexion 41.

En variante ou en complément, chaque cellule 42 est délimitée par une enveloppe contenant le ou les motifs 44 de la cellule 42. Au moins un motif 44 d'une cellule 42 d'une couche de maillage 40 comprend une extrémité en saillie par rapport à l'enveloppe de la cellule 42. L'extrémité en saillie est le prolongement de même matière du ou d'un des motifs 44 de la cellule 42. L'extrémité en saillie permet de connecter le motif 44 à un autre motif 44 de la même ou d'une autre couche de maillage 40 en lieu et place d'un bras d'interconnexion 47 de la matrice d'interconnexion 41.

Par exemple, comme illustré sur la figure 13, les traits pleins 50 représentent des extrémités de motifs 44 de cellules 42, connectés aux motifs 44 d'autres cellules 42 de la même couche de maillage 40.

De telles extrémités en saillie permettent de limiter la surface superposée apparente du maillage et, ainsi, de rendre plus complexe la détection d'une boucle par un attaquant.

La deuxième surface de protection 23 est superposée sur la première surface de protection 22. En particulier, la deuxième surface de protection 23 recouvre l'intégralité ou au moins une partie des circuits imprimés et des circuits intégrés de l'équipement 21.

Dans l'exemple illustré sur la figure 1, la deuxième surface de protection 23 a une forme de capot. Dans ce cas, la deuxième surface de protection 23 comprend une surface plane 51 avec des bords latéraux 52. Les bords latéraux 52 de la deuxième surface de protection 23 sont connectés à la première surface de protection 22.

La deuxième surface de protection 23 présente dans sa surface plane 51 et ses bords latéraux 52, avantageusement la même structure que la première surface de protection 22 illustrée sur la figure 2, c'est-à-dire des couches de maillage 40 comprenant des cellules 42 et au moins une matrice d'interconnexion 41 connectant les cellules 42 les unes aux autres de sorte à former un maillage. Ainsi, la deuxième surface de protection 23 comprend une pluralité d'autres boucles.

Le module de détection 26 est disposé à l'intérieur du volume interne 24.

Le module de détection 26 est propre à détecter une modification d'une caractéristique électrique de chaque boucle et, notamment, une rupture de la continuité ou une altération du signal parcourant les motifs 44 de chaque boucle.

Une intrusion étant caractérisée par une rupture ou une altération, le module de détection 26 est donc propre à détecter les intrusions. Par exemple, le module de détection 26 est propre à détecter une coupure électrique par boucle sèche, émission-réception d'un signal ou encore mesure de latence.

Le module de détection 26 est configuré pour appliquer une politique de sécurité suite à la détection d'une modification d'une caractéristique électrique du signal parcourant une boucle telle qu'une rupture de continuité. La politique de sécurité comprend, par exemple, l'activation d'une alarme prévenant un opérateur de la détection d'une tentative d'intrusion, ainsi que l'effacement des données sensibles de l'équipement 21 protégé par le système 20.

Typiquement, le module de détection 26 est configuré pour émettre périodiquement des signaux électriques sur chaque boucle électrique, puis pour en vérifier la bonne réception. En cas d'une mauvaise réception d'un signal électrique, le module de détection 26 est propre à détecter une altération physique d'une ou plusieurs boucles électriques. Ainsi, le module de détection 26 surveille en permanence les boucles pour détecter des variations de leurs caractéristiques électriques qui indiqueraient, par exemple, une tentative d'attaque par perçage.

La source d'énergie principale 28 est située à l'extérieur du volume interne 24.

La source d'énergie principale 28 est configurée pour alimenter le module de détection 26 via une interface de commande, de contrôle et d'alimentation. L'interface permet de relier la sortie du volume interne 30 à la source d'énergie principale 28 sans compromettre la sécurité.

Lorsque le module de détection 26 est en fonctionnement, la source d'énergie principale 28 est propre à fonctionner en permanence. L'interruption de la source d'énergie principale 28 est surveillée par le module de détection 26.

Lorsque le module de détection 26 repère une coupure de la source d'énergie principale 28, le module de détection 26 est propre à générer une alarme utilisée pour rendre inaccessible ou inutilisable les données à protéger, car la surveillance ne peut plus être assurée.

La source d'énergie secondaire 30 est située à l'intérieur du volume interne 24.

La source d'énergie secondaire 30 est directement reliée au module de détection 26. La source d'énergie secondaire 30 est propre à alimenter le module de détection 26 lorsque le module de détection 26 détecte une rupture de la source d'énergie principale 28. Ainsi, du fait de la source d'énergie secondaire 30, le module de détection 26 est capable d'effectuer des actions pour rendre inaccessibles ou inutilisables les données à protéger.

Un procédé de détection d'intrusions à partir du système 20 de détection d'intrusions de la figure 1 va maintenant être décrit.

Initialement, le procédé de détection d'intrusions comprend la fourniture du système de détection d'intrusions 20 tel que décrit précédemment.

Le module de détection 26 contrôle en permanence l'intégrité des boucles de sorte à détecter une modification d'une caractéristique électrique de l'une des boucles. Dans ce cas, le module de détection 26 effectue des actions de protection sur l'équipement protégé par le système 20. Par exemple, le module de détection 26 efface les données sensibles de l'équipement 21.

Lorsque la source d'énergie principale 28 est coupée, le module de détection 26 détecte une telle interruption et est alors alimenté par la source d'énergie secondaire 30 de sorte à effectuer les actions de protection.

Ainsi, le système 20 permet de protéger le volume interne 24 en périphérie par un maillage de plusieurs boucles entremêlées, le plus fin possible et le plus difficile à court-circuiter aux entrées et aux sorties des boucles. Cela oblige l'attaquant à poser une multitude de shunts pouvant à chaque étape générer une alerte sur la boucle attaquée.

En effet, chaque cellule 42 protège les cellules 42 voisines et périphériques, nécessitant alors la pose de nombreux shunts pour dégager une surface suffisante et accéder étage par étage dans le volume protégé. En outre, les extrémités de chaque boucle sont difficiles à atteindre car elles sont généralement enfouies dans les couches de maillage internes 40.

L'entrelacement des boucles, par exemple via les motifs 44 entrelacés d'une même cellule 42, rend plus difficile le suivi d'une boucle de bout en bout et ne permet pas de court-circuiter aisément les deux extrémités de la boucle. En effet, la formation de boucles différentes à partir de motifs entrelacés augmente le risque de court-circuit entre ces boucles lors d'une attaque.

Ainsi, la structure cellulaire intègre un tricotage haut-bas des boucles dans les couches de maillage 40 ce qui oblige l'attaquant à court-circuiter au moins une cellule 42 de la quasi-totalité des boucles pour accéder à l'équipement protégé, mais également plusieurs fois les mêmes boucles. Or, de tels court-circuitages augmentent le risque d'erreur de l'attaquant et donc augmentent les probabilités de détection d'une intrusion.

Une telle structure cellulaire est rendue possible par la présence de points de connexion traversant 46 répartis sur toute la surface des couches de maillage 40.

Avantageusement, le maillage parcourt à la fois la deuxième surface de protection 23 et la première surface de protection 22 afin que le maillage soit complètement continu et protège en totalité le module de détection 26, ainsi que les fonctions à protéger.

En outre, afin d'avoir un maillage couvrant au maximum la surface enveloppant le volume à protéger, une optimisation du recouvrement des espaces vides entre les boucles est assurée en superposant plusieurs couches.

Ainsi, le système 20 forme un système de protection plus résistant aux attaques et rendant plus difficile pour un attaquant le court-circuit d'une ou plusieurs boucles électriques d'un maillage après rétro-ingénierie.

L'homme du métier comprendra que l'invention ne se limite pas au mode de réalisation décrit, ni aux exemples particuliers de la description.

Par exemple, en complément, lorsque l'équipement 21 présente des circuits intégrés ou circuits imprimés présentant des informations sensibles en recto-verso, le système de détection d'intrusions 20 intègre une surface de protection permettant de protéger le recto-verso des circuits intégrés et des circuits imprimés de l'équipement 21.

En variante ou en complément, les cellules sont réduites à des points de connexion et à des microvias. Dans ce cas, la distance minimale séparant deux cellules 42 d'une même boucle et appartenant à deux couches de maillage 40 différentes est inférieure ou égale à 100 micromètres, de préférence inférieure ou égale à 50 micromètres.

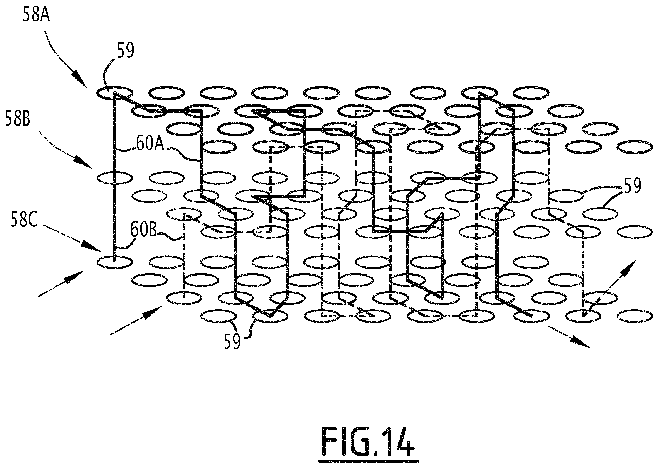

Par exemple, la figure 14 illustre trois couches de maillage 58A, 58B, 58C comprenant des points de connexion 59 et des microvias 60A, 60B en lieu et place des cellules 42. Les microvias 60A connectent les points de connexion 59 d'une première couche 58A avec les points de connexion 59 d'une deuxième couche 58B, la deuxième couche 58B étant immédiatement contigüe à la première couche 58A. Les microvias 60B connectent les points de connexion 59 de la deuxième couche 58B avec les points de connexion 59 d'une troisième couche 58C, la troisième couche 58C étant immédiatement contigüe à la deuxième couche 58B et distincte de la première couche 58A.

La figure 14 représente, de ce fait, deux boucles formées à partir des microvias 60A, 60B : une première boucle est représentée en trait gras noir et une deuxième boucle en traits pointillés.

## Revendications

1. Système (20) de détection d'intrusions comprenant :
- au moins deux couches de maillage (40) superposées, chaque couche de maillage (40) comprenant une pluralité de cellules (42) et une pluralité de points de connexion traversant (46), chaque cellule (42) comprenant au moins un motif (44) continu dont au moins une extrémité est reliée à un point de connexion traversant (46), le taux de couverture de l'ensemble des motifs (44) de chaque cellule (42) étant strictement supérieur à 80 pourcents, l'ensemble des cellules (42) de chaque couche de maillage (40) délimitant une zone protégée par la couche de maillage (40),
- une pluralité de connexions (45), chaque connexion (45) connectant entre eux deux motifs (44) de cellules (42) de différentes couches de maillage (40) par l'intermédiaire de points de connexion traversant (46) pour former des boucles, chaque boucle étant un circuit électrique continu, chaque boucle comprenant des motifs (44) appartenant à au moins deux couches de maillage (40) différentes,
- un module de détection (26) propre à détecter une modification d'une caractéristique électrique de chaque boucle,
**caractérisé en ce que** les points de connexion traversant (46) de chaque couche de maillage (40) sont répartis sur toute la surface de la zone protégée par la couche de maillage (40), l'écart entre la densité moyenne de points de connexion traversant (46) sur chaque sous-zone connexe de la zone protégée étant inférieur ou égal à 10 pourcents.

2. Système selon la revendication 1, dans lequel chaque zone protégée est formée d'une partie centrale et d'une partie périphérique entourant la partie centrale, la partie périphérique occupant au plus 30 pourcents de la surface de la zone protégée, les points de connexion traversant (46) de chaque couche de maillage (40) étant répartis sur la zone centrale et sur la zone périphérique de la zone protégée par la couche de maillage (40).

3. Système selon la revendication 1 ou 2, dans lequel la plus grande dimension de chaque cellule (42) est au plus égale à un tiers de la plus grande dimension de la zone protégée par la couche de maillage (40) de la cellule (42).

4. Système (20) selon l'une quelconque des revendications 1 à 3, dans lequel chaque cellule (42) est délimitée par une enveloppe contenant le ou les motifs (44) de la cellule (42), au moins un motif (44) d'une cellule (42) d'une couche de maillage (40) comprenant une extrémité (50) en saillie par rapport à l'enveloppe de la cellule (42), l'extrémité (50) en saillie étant venue de matière avec le ou l'un des motifs (44) de la cellule (42), l'extrémité (50) en saillie connectant le motif (44) à un autre motif (44) de la même ou d'une autre couche de maillage (40).

5. Système (20) selon l'une quelconque des revendications 1 à 4, dans lequel au moins une cellule (42) d'une couche de maillage (40) comprend au moins deux motifs (44) entrelacés.

6. Système (20) selon l'une quelconque des revendications 1 à 5, dans lequel l'espacement entre les cellules (42) adjacentes est inférieur ou égal à 100 micromètres, de préférence inférieur ou égal à 50 micromètres.

7. Système (20) selon l'une quelconque des revendications 1 à 6, dans lequel les motifs (44) d'une même boucle et appartenant à une première couche de maillage (40) et à une deuxième couche de maillage (40), adjacente à la première couche de maillage (40), sont disposés les uns par rapport aux autres de sorte que les projections selon la direction de superposition (Z) desdits motifs (44) de la première couche de maillage (40) sur la deuxième couche de maillage (40) soient partiellement superposées ou non superposées auxdits motifs (44) de la deuxième couche de maillage (40).

8. Système (20) selon l'une quelconque des revendications 1 à 7, dans lequel les points de connexion traversant (46) connectant les motifs (44) de chaque boucle sont disposés en vis-à-vis de motifs (44) appartenant à au moins une autre boucle.

9. Système (20) selon l'une quelconque des revendications 1 à 8, dans lequel la distance minimale séparant deux cellules (42) d'une même boucle et appartenant à deux couches de maillage (40) différentes est inférieure ou égale à 100 micromètres.

10. Système (20) selon l'une quelconque des revendications 1 à 9, dans lequel les points de connexion traversant (46) sont des microvias.

## Patentansprüche

1. System (20) zum Detektieren von Übergriffen, umfassend:
- mindestens zwei übereinanderliegende Maschenschichten (40), wobei jede Maschenschicht (40) eine Mehrzahl von Zellen (42) und eine Mehrzahl von durchgreifenden Verbindungspunkten (46) aufweist, wobei jede Zelle (42) mindestens ein kontinuierliches Muster (44) aufweist, von dem mindestens ein Ende an einen durchgreifenden Verbindungspunkt (46) angeschlossen ist, wobei die Überdeckungsrate der Gesamtheit der Muster (44) jeder Zelle (42) streng größer als 80 Prozent ist, wobei die Gesamtheit der Zellen (42) jeder Maschenschicht (40) eine von der Maschenschicht (40) geschützte Zone begrenzt,
- eine Vielzahl von Verbindungen (45), wobei jede Verbindung (45) zwei Muster (44) von Zellen 842) unterschiedlicher Maschenschichten (40) mittels durchgreifender Verbindungspunkte (46) untereinander verbindet, um Schleifen zu bilden, wobei jede Schleife ein kontinuierlicher elektrischer Kreis ist und jede Schleife Muster (44) umfasst, die zu mindestens zwei unterschiedlichen Maschenschichten (40) gehören,
- ein Detektionsmodul (26), das geeignet ist, eine Änderung einer elektrischen Eigenschaft jeder Schleife zu detektieren,
**dadurch gekennzeichnet, dass** die durchgreifenden Verbindungspunkte (46) jeder Maschenschicht (40) über die gesamte Fläche der durch die Maschenschicht (40) geschützten Zone verteilt sind, wobei die Abweichung zwischen der mittleren Dichte der durchgreifenden Verbindungspunkte (46) auf jeder zugehörigen Sub-Zone der geschützten Zone kleiner oder gleich 10 Prozent ist.

2. System nach Anspruch 1, bei dem jede geschützte Zone aus einem mittleren Bereich und einem den mittleren Bereich umgebenden peripheren Bereich gebildet ist, wobei der periphere Bereich maximal 30 Prozent der geschützten Zone einnimmt, wobei die durchgreifenden Verbindungspunkte (46) jeder Maschenschicht (40) auf der mittleren Zone und der peripheren Zone der von der Maschenschicht (40) geschützten Zone verteilt sind.

3. System nach Anspruch 1 oder 2, bei dem die größte Abmessung jeder Zelle (52) maximal gleich einem Drittel der größten Abmessung der von der Maschenschicht (40) der Zelle (42) geschützten Zone ist.

4. System (20) nach einem beliebigen der Ansprüche 1 bis 3, bei dem jede Zelle (42) durch eine Hülle begrenzt ist, die das oder die Muster (44) der Zelle (42) enthält, wobei mindestens ein Muster (44) der Zelle (42) einer Maschenschicht (40) ein in Bezug auf die Hülle der Zelle (42) hervorstehendes Ende (50) umfasst, wobei das hervorstehende Ende (50) aus dem gleichen Material wie das oder eines der Muster (44) der Zelle (42) hergestellt ist, wobei das hervorstehende Ende das Muster (44) mit einem anderen Muster (44) derselben oder einer anderen Maschenschicht (40) verbindet.

5. System (20) nach einem beliebigen der Ansprüche 1 bis 4, bei dem mindestens eine Zelle (42) einer Maschenschicht (40) mindestens zwei verschachtelte Muster (44) umfasst.

6. System (20) nach einem beliebigen der Ansprüche 1 bis 5, bei dem der Abstand zwischen benachbarten Zellen (42) kleiner oder gleich 100 Mikrometer, vorzugsweise kleiner oder gleich 50 Mikrometer ist.

7. System (20) nach einem beliebigen der Ansprüche 1 bis 6, bei dem die Muster (44) einer selben Schleife, die zu einer ersten Maschenschicht (40) und einer zweiten Maschenschicht (40), benachbart zur ersten Maschenschicht (40) gehören, zueinander so angeordnet sind, dass die Projektionen der Muster (44) der ersten Maschenschicht (40) gemäß der Überlagerungsrichtung (Z) auf die zweite Maschenschicht (40) teilweise den Mustern (44) der zweiten Maschenschicht (40) überlagert oder nicht überlagert sind.

8. System (20) nach einem beliebigen der Ansprüche 1 bis 7, bei dem die durchgreifenden Verbindungspunkte (46), die die Muster (44) jeder Schleife verbinden, gegenüberliegend zu den Mustern (44) angeordnet sind, die zu mindestens einer anderen Schleife gehören.

9. System (20) nach einem beliebigen der Ansprüche 1 bis 8, bei dem der minimale Abstand, der zwei Zellen (42) einer selben Schleife trennt und die zu zwei unterschiedlichen Maschenschichten (40) gehören, kleiner oder gleich 100 Mikrometer ist.

10. System (20) nach einem beliebigen der Ansprüche 1 bis 9, bei dem die durchgreifenden Verbindungspunkte (46) Microvias sind.

## Claims

1. Intrusion detection system (20), comprising:
- at least two superimposed mesh layers (40), each mesh layer (40) comprising a plurality of cells (42) and a plurality of through connecting points (46), each cell (42) comprising at least one continuous pattern (44), at least one end of which is connected to a through connecting point (46), the coverage rate of the set of patterns (44) of each cell (42) being strictly greater than 80 percent, the set of cells (42) of each mesh layer (40) defining a zone protected by the mesh layer (40),
- a plurality of connections (45), each connection (45) connecting two cell patterns (44) of different mesh layers (42) to one another via through connecting points (46) to form loops, each loop being a continuous electrical circuit, each loop comprising patterns (44) belonging to at least two different mesh layers (40),
- a detection module (26) able to detect a modification of an electrical characteristic of each loop,
**characterized in that** the through connection points (46) of each mesh layer (40) are distributed over the entire surface of the zone protected by the mesh layer (40), the deviation between the mean density of through connecting points (46) on each related sub-zone of the protected zone being less than or equal to 10 percent.

2. System according to claim 1, wherein each protected zone is formed by a central part and a peripheral part surrounding the central part, the peripheral part taking up no more than 30 percent of the surface of the protected zone, the through connecting points (46) of each mesh layer (40) being distributed over the central zone and over the peripheral zone of the zone protected by the mesh layer (40).

3. System according to claim 1 or 2, wherein the largest dimension of each cell (42) is at most equal to one third of the largest dimension of the zone protected by the mesh layer (40) of the cell (42).

4. System (20) according to any one of claims 1 to 3, wherein each cell (42) is defined by an enclosure containing the pattern(s) (44) of the cell (42), at least one pattern (44) of a cell (42) of a mesh layer (40) comprising one end (50) protruding relative to the enclosure of the cell (42), the protruding end (50) being integral with the or one of the patterns (44) of the cell (42), the protruding end (50) connecting the pattern (44) to another pattern (44) of the same or another mesh layer (40).

5. System (20) according to any one of claims 1 to 4, wherein at least one cell (42) of a mesh layer (40) comprises at least two interwoven patterns (44).

6. System (20) according to any one of claims 1 to 5, wherein the spacing between the adjacent cells (42) is less than or equal to 100 micrometers, and preferably less than or equal to 50 micrometers.

7. System (20) according to any one of claims 1 to 6, wherein the patterns (44) of a same loop and belonging to a same mesh layer (40) and a second mesh layer (40), adjacent to the first mesh layer (40), are arranged relative to one another such that the projections along the superposition direction (Z) of said patterns (44) of the first mesh layer (40) on the second mesh layer (40) are partially superimposed or not superimposed on said patterns (44) of the second mesh layer (40).

8. System (20) according to any one of claims 1 to 7, wherein the through connecting points (46) connecting the patterns (44) of each loop are arranged across from patterns (44) belonging to at least one other loop.

9. System (20) according to any one of claims 1 to 8, wherein the minimum distance separating two cells (42) of a same loop and belonging to two different mesh layers (40) is less than or equal to 100 micrometers.

10. System (20) according to any one of claims 1 to 9, wherein the through connecting points (46) are micro-vias.
